# EUROPÄISCHE PATENTANMELDUNG

(11) **EP 4 592 139 A1**
(43) Veröffentlichungstag der Anmeldung: **30.07.2025**
(21) Anmeldenummer: 25153976.3
(22) Anmeldetag: 24.01.2025
(51) Int. Cl.: B60P 3/40

(54) **ANGETRIEBENES TRANSPORTFAHRWERK, TRANSPORTSYSTEM ZUM TRANSPORTIEREN EINER LAST, ZAHNRAD UND VERFAHREN HIERZU**

(30) Priorität: 26.01.2024 DE 102024102339
(71) Anmelder: HTS Hydraulische Transportsysteme GmbH, 70736 Fellbach (DE)
(72) Erfinder: STIEGELE, Armin, 70736 Fellback (DE)
(74) Vertreter: Sattler de Sousa e Brito, Clara

(57) **Zusammenfassung**

Die Erfindung betrifft ein angetriebenes Transportfahrwerk (1) mit einem Rahmen(2), mit einer mit dem Rahmen (2) wirkverbundenen Antriebseinheit (6, 7) und mit einem mit dem Rahmen (2) wirkverbundenen Drehteller (11), wobei der Drehteller (11) zur Auflage einer zu transportierenden Last (12) vorgesehen ist, und wobei der Drehteller (11) relativ zum Rahmen (2) drehbar ist, wobei das angetriebene Transportfahrwerk (1) einen Drehgeber (18) umfasst, wobei der Drehgeber (18) den Drehwinkel und/oder die Änderung des Drehwinkels des Drehtellers (11) relativ zum Rahmen (2) erfasst, und dass der Drehgeber (18) mit dem Drehteller (11) federnd wirkverbunden ist.

## Beschreibung

Die Erfindung betrifft ein angetriebenes Transportfahrwerk und ein Transportsystem zum Transportieren einer Last sowie ein Zahnrad.

Die Erfindung betrifft weiter ein Verfahren zum Transportieren einer Last.

Um eine, insbesondere schwere, Last zu transportieren, ist aus dem Stand der Technik bekannt, dass die, insbesondere schwere, Last auf einem oder mehreren starren Transportfahrwerken sowie auf einem oder mehreren angetriebenen Transportfahrwerken aufgelegt wird. Hierbei wird die Last meist auf einem Drehteller des Transportfahrwerks aufgelegt. Der Drehteller kann sich um eine Drehtellerachse drehen, so dass beispielsweise eine Kurvenfahrt des Transportfahrwerks mit der Last einfach ermöglicht ist. Mit dem Drehteller ist ein Drehgeber verbunden, der den Drehwinkel und/oder die Änderung des Drehwinkels des Drehtellers erfasst. Der gemessene Drehwinkel und/oder die Änderung des Drehwinkels ermöglicht beispielsweise ein präzises Steuern des Transportfahrwerks. Aufgrund der schweren Last können allerdings kleine Bewegungen des Drehtellers in einer anderen Richtung als um die vorgesehene Drehtellerachse auftreten. Diese kleinen Bewegungen können sich auf den Drehgeber übertragen, wodurch eine mechanische Beschädigung des Drehgebers erfolgen kann.

Es ist daher Aufgabe der Erfindung, ein angetriebenes Transportfahrwerk und/oder ein Transportsystem zum Transportieren einer Last und/oder ein Zahnrad anzugeben, welches sich gut und einfach, und insbesondere möglichst beschädigungsfrei, steuern lässt. Es ist weiter Aufgabe der Erfindung, ein Verfahren zum Transportieren einer Last mit einem Transportsystem anzugeben, welches eine gute und einfache, und insbesondere eine beschädigungsfreie, Steuerung ermöglicht.

Die Erfindung löst diese Aufgabe mittels der Gegenstände der unabhängigen Ansprüche. Vorteilhafte Weiterbildungen der Erfindung sind Gegenstand der entsprechenden abhängigen Ansprüche sowie in der Beschreibung beschrieben und in den Zeichnungen gezeigt.

Erfindungsgemäß umfasst das angetriebene Transportfahrwerk einen Rahmen. Das Transportfahrwerk umfasst eine mit dem Rahmen wirkverbundene Antriebseinheit und einen mit dem Rahmen wirkverbundenen Drehteller. Der Drehteller ist zur Auflage einer zu transportierenden Last vorgesehen. Der Drehteller umfasst vorzugsweise eine Lastauflageeinrichtung und einen Drehtellerbolzen. Der Drehteller ist relativ zum Rahmen drehbar. Das angetriebene Transportfahrwerk umfasst einen Drehgeber, wobei der Drehgeber den Drehwinkel und/oder die Änderung des Drehwinkels des Drehtellers relativ zum Rahmen erfasst. Der Drehgeber ist mit dem Drehteller federnd wirkverbunden. Vorteilhaft ist der Drehgeber mit dem Drehtellerbolzen federnd wirkverbunden.

Durch die federnde Wirkverbindung ist ermöglicht, dass der Drehteller, insbesondere der Drehtellerbolzen, kleine Bewegungen ausführen kann, ohne dass diese den Drehgeber mechanisch beschädigen. Dennoch ist erfindungsgemäß ermöglicht, dass der Drehgeber die Drehbewegung des Drehtellers, insbesondere des Drehtellerbolzens, erfasst.

Vorteilhaft ist der Drehteller um eine Drehtellerachse drehbar. Vorteilhaft ist der Drehgeber um eine Drehgeberachse drehbar. Vorteilhaft sind die Drehtellerachse und die Drehgeberachse etwa parallel zu einander. Dadurch ist eine kompakte Bauweise, insbesondere mit einer geringen Höhe, des angetriebenen Transportfahrwerks ermöglicht.

Vorzugsweise ist der Drehgeber um eine Drehgeberachse drehbar. Vorzugsweise ist der Drehgeber mit dem Drehteller in zur Drehgeberachse radialen Richtung federnd wirkverbunden. Dadurch ist ermöglicht, dass der Drehgeber eine Drehung des Drehtellers um die Drehtellerachse messen kann und insbesondere dass aufgrund der federnden Wirkverbunden Bewegungen in anderen Richtungen als um die Drehtellerachse abgefedert werden, so dass vorteilhaft keine mechanische Beschädigung des Drehgebers erfolgt.

Zweckmäßig ist der Drehgeber um eine Drehgeberachse drehbar. Zweckmäßig ist der Drehgeber mit dem Drehteller in zur Drehgeberachse axialen Richtung beweglich gelagert. Dadurch ist ermöglicht, dass der Drehgeber die Drehbewegung um die Drehtellerachse erfasst, und insbesondere gleichzeitig in axialer Richtung keine Kräfte aufnimmt, so dass keine mechanische Belastung in axialer Richtung auf den Drehgeber einwirkt, so dass dieser nicht beschädigt wird. Vorteilhaft kann die federnden Wirkverbindung entsprechend so ausgelegt werden, dass diese Kräfte außerhalb der axialen und radialen Richtung der Drehgeberachse aufnimmt.

Vorteilhaft ist der Drehgeber mit dem Drehteller spielfrei wirkverbunden, insbesondere vorgespannt. Dadurch können bereits kleinste, inkrementelle Drehwinkel und/oder Änderungen des Drehwinkels erfasst werden. Aufgrund der federnden Wirkverbindung ist ermöglicht, dass der Drehgeber auch bei spielfreier Wirkverbindung, insbesondere bei Vorspannung, mechanisch beschädigungsfrei bleibt.

Vorzugsweise ist der Drehgeber mit dem Drehteller über eine Zahnradverbindung, insbesondere über eine Stirnradverzahnung, verbunden. Die Zahnradverbindung, insbesondere die Stirnradverzahnung, ist hierbei zweckmäßig besonders kompakt, und überträgt kleinste Drehwinkel und/oder Änderungen des Drehwinkels nahezu verlustfrei.

Zweckmäßig umfasst ein Zahnrad einen Zahnaußenkranz und eine Zahnradnabe. Zweckmäßig ist der Zahnaußenkranz mit der Zahnradnabe federnd verbunden. Zweckmäßig ist das Zahnrad am Drehteller, insbesondere an dem Drehtellerbolzen festgelegt. Insbesondere ist die Zahnradnabe drehfest, insbesondere fest, mit dem Drehteller, insbesondere mit dem Drehtellerbolzen, verbunden. Zweckmäßig ist nur ein Zahnrad, insbesondere nur das am Drehteller angeordnete Zahnrad oder nurdas am Drehgeber angeordnete Zahnrad, federnd ausgebildet. Zweckmäßig ist das andere Zahnrad, insbesondere das am Drehgeber angeordnete Zahnrad oder das am Drehteller angeordnete Zahnrad, ungefedert, insbesondere starr, ausgebildet. Dadurch ist die Federung besonders vorteilhaft kompakt und einfach am Zahnrad ausgebildet. Insbesondere ist der Zahnkranz federnd mit seiner Nabe verbunden. Dadurch kann die Verzahnung vorteilhaft spielfrei vorgespannt und gleichzeitig können vorteilhaft Taumelbewegungen des Drehtellers federnd kompensiert werden.

Vorteilhaft umfasst ein Zahnrad Zähne. Vorteilhaft sind die Zähne federnd ausgebildet. Vorteilhaft umfassen die Zähne Gummi, insbesondere sind die Zähne mit einer, insbesondere federnden, Gummischicht beschichtet. Vorteilhaft bestehen die Zähne aus Gummi. Vorteilhaft ist der Zahn an einen Grundkörper angefügt, insbesondere durch Spritzguss, insbesondere Komponentenspritzguss. Vorteilhaft umfasst der Grundkörper eine Zahnradnabe, und/oder bildet die Zahnradnabe den Grundkörper. Vorteilhaft umfasst der Grundkörper einen Zahnaußenkranz, und/oder bildet der Zahnaußenkranz den Grundkörper. Vorteilhaft umfasst der Grundkörper ein Zahnrad, und/oder bildet das Zahnrad den Grundkörper. Vorzugsweise ist das Zahnrad einteilig ausgebildet ist. Vorzugsweise ist das Zahnrad mindestens teilweise, insbesondere vollständig, aus einem Kunststoff ausgebildet.

Zweckmäßig ist das Zahnrad mit dem Drehteller, insbesondere mit dem Drehtellerbozen, drehfest verbunden. Zweckmäßig umfasst der Drehgeber ein weiteres Zahnrad. Zweckmäßig ist das weitere Zahnrad des Drehgebers ungefedert, insbesondere starr. Dadurch kann die Federrate des gefederten Zahnrads gut auf das System aus Zahnrad und weiterem Zahnrad eingestellt werden. Dadurch ist auch das System aus Zahnrad und weiteren Zahnrad konstruktiv vergleichsweise einfach und robust ausgebildet.

Vorteilhaft ist der Drehgeber mit dem Drehteller über eine Riemenverbindung, insbesondere über eine Zahnriemenverbindung oder über eine Kettenverbindung, verbunden. Dadurch ist ermöglicht, dass eine Drehbewegung des Drehtellers auf den Drehgeber übertragen wird. Dadurch ist insbesondere auch ermöglicht, dass Kräfte, insbesondere in einer Richtung anders als in Drehrichtung, nicht oder nur gering übertragen werden, wodurch der Drehgeber vor mechanischer Beschädigung geschützt ist.

Vorzugsweise umfasst die Riemenverbindung oder die Kettenverbindung einen Spanner, insbesondere einen federnden Spanner zum Spannen des Riemens oder der Kette. Dadurch kann eine spielfreie Übertragung der Drehbewegung des Drehtellers auf den Drehgeber ermöglicht werden, wodurch insbesondere inkrementelle Änderungen des Drehwinkels und/oder inkrementelle Drehwinkel messbar sind.

Erfindungsgemäß umfasst ein Zahnrad, insbesondere für ein hierin beschriebenes angetriebenes Transportfahrwerk, einen Zahnaußenkranz und eine Zahnradnabe, wobei der Zahnaußenkranz mit der Zahnradnabe federnd verbunden ist. Zweckmäßig ist der Zahnaußenkranz mit der Zahnradnabe über einen Steg verbunden. Zweckmäßig ist der Steg mäanderförmig. Zweckmäßig ist der Steg S-förmig, wobei insbesondere ein Ende des S mit der Zahnradnabe und das andere Ende des S mit dem Zahnaußenkranzverbunden ist. Zweckmäßig ist der Zahnaußenkranz mit der Zahnradnabe über mindestens zwei Stege, bevorzugt über mindestens vier Stege, besonders bevorzugt über mindestens sechs Stege, verbunden.

Zweckmäßig ist der Zahnaußenkranz mit der Zahnradnabe über höchstens zwölf Stege, bevorzugt über höchstens zehn Stege, besonders bevorzugt über höchstens acht Stege, verbunden. Zweckmäßig ist der Zahnaußenkranz mit der Zahnradnabe über genau sieben Stege verbunden.

Vorzugsweise werden über den Steg, insbesondere über die Stege, Kräfte in Drehrichtung nahezu verlustfrei von der Zahnradnabe zum Zahnaußenkranz übertragen. Vorzugsweise werden über den Steg, insbesondere über die Stege, Kräfte in einer anderen Richtung als der Drehrichtung abgefedert und nur gering oder nicht von der Zahnradnabe zum Zahnaußenkranz übertragen.

Erfindungsgemäß umfasst ein Transportsystem zum Transportieren einer Last ein erstes angetriebenes Transportfahrwerk mit einem ersten Rahmen, mit einer mit dem ersten Rahmen wirkverbundenen ersten Antriebseinheit und mit einem mit dem ersten Rahmen wirkverbundenen ersten Drehteller, wobei der erste Drehteller zur Auflage der zu transportierenden Last vorgesehen ist, und wobei der erste Drehteller relativ zum ersten Rahmen drehbar ist, wobei das erste angetriebene Transportfahrwerk einen ersten Drehgeber umfasst, wobei der erste Drehgeber den ersten Drehwinkel und/oder die Änderung des ersten Drehwinkels des ersten Drehtellers relativ zum ersten Rahmen erfasst, wobei der erste Drehgeber mit dem ersten Drehteller federnd wirkverbunden ist. Erfindungsgemäß umfasst das Transportsystem ein zweites angetriebenes Transportfahrwerk mit einem zweiten Rahmen, mit einer mit dem zweiten Rahmen wirkverbundenen zweiten Antriebseinheit und mit einem mit dem zweiten Rahmen wirkverbundenen zweiten Drehteller, wobei der zweite Drehteller zur Auflage der zu transportierenden Last vorgesehen ist, und wobei der zweite Drehteller relativ zum zweiten Rahmen drehbar ist, wobei das zweite angetriebene Transportfahrwerk einen zweiten Drehgeber umfasst, wobei der zweite Drehgeber den zweiten Drehwinkel und/oder die Änderung des zweiten Drehwinkels des zweiten Drehtellers relativ zum zweiten Rahmen erfasst, wobei der zweite Drehgeber mit dem zweiten Drehteller federnd wirkverbunden ist, wobei das Transportsystem ein Steuerungssystem zum Steuern des zweiten angetriebenen Transportfahrwerks in Abhängigkeit des ersten Drehwinkels und/oder der ersten Änderung des ersten Drehwinkels des ersten angetriebenen Transportfahrwerks und in Abhängigkeit des zweiten Drehwinkels und/oder der zweiten Änderung des zweiten Drehwinkels des zweiten angetriebenen Transportfahrwerks umfasst.

Erfindungsgemäß umfasst ein Verfahren zum Transportieren einer Last mit einem hierin beschriebenen Transportsystem folgende Verfahrensschritten:
- Ausrichtung des ersten angetriebenen Transportfahrwerks,
- Ausrichtung des zweiten angetriebenen Transportfahrwerks,
- Kalibrierung, insbesondere Nullen, des ersten Drehgebers und des zweiten Drehgebers,
- Steuerung des zweiten angetriebenen Transportfahrwerks mit dem Steuerungssystem in Abhängigkeit des ersten Drehwinkels und/oder der ersten Änderung des ersten Drehwinkels des ersten angetriebenen Transportfahrwerks und in Abhängigkeit des zweiten Drehwinkels und/oder der zweiten Änderung des zweiten Drehwinkels des zweiten angetriebenen Transportfahrwerks.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Vorteilhafte Ausführungsbeispiele der Erfindung werden nachfolgende anhand der beiliegenden Figuren beschrieben. Es zeigen
- Fig. 1: eine perspektivische Obenansicht eines angetriebenen Transportfahrwerks,
- Fig. 2: eine perspektivische Unteransicht eines Details, insbesondere eines Rahmens und eines Drehgebers, des angetriebenen Transportfahrwerks,
- Fig. 3: eine Teilschnittzeichnung des Transportfahrwerks, insbesondere durch den Drehteller und den Drehgeber,
- Fig. 4: eine weitere Teilschnittzeichnung des Transportfahrwerks, insbesondere durch den Drehteller und den Drehgeber, die über eine Zahnradverbindung wirkverbunden sind,
- Fig. 5: eine beispielhafte Darstellung einer Riemenverbindung,
- Fig. 6: eine beispielhafte Darstellung einer Kettenverbindung, und

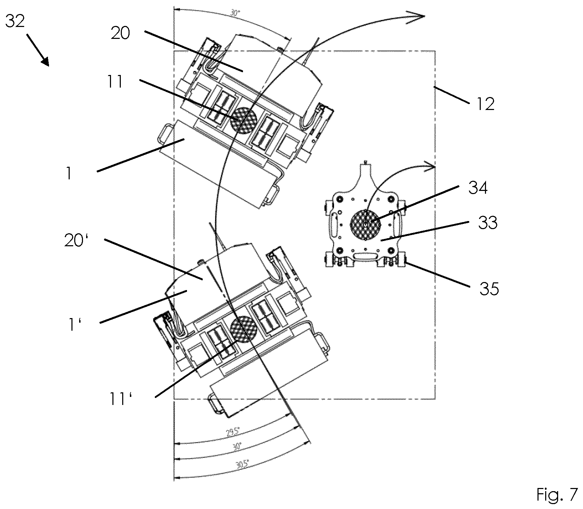

- Fig. 7: eine schematische Darstellung eines Transportsystems in einer 30°-Kurvenfahrt.

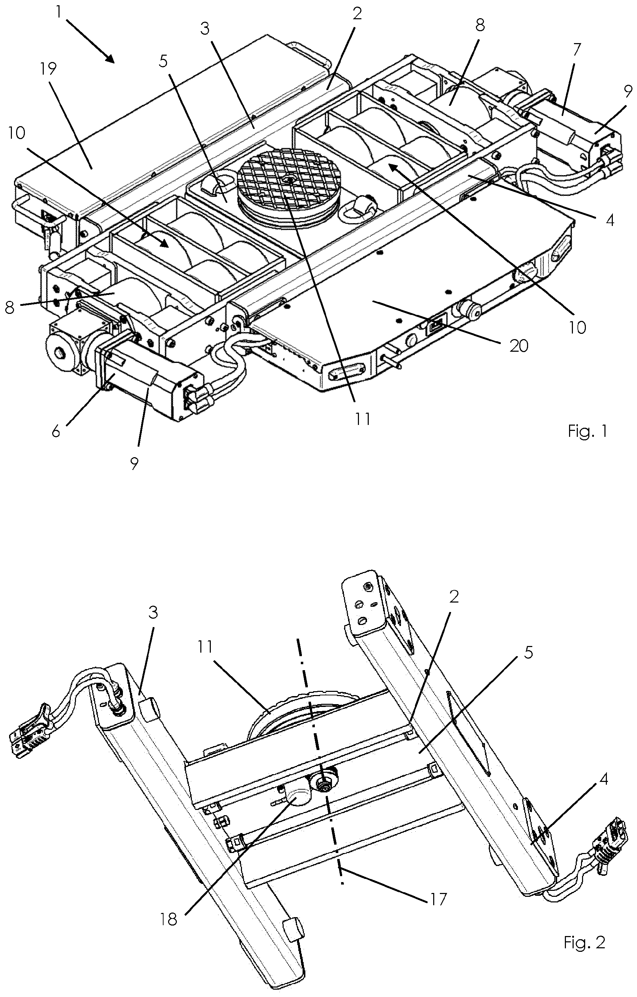

In einem ersten Ausführungsbeispiel zeigt die Fig. 1 ein angetriebenes Transportfahrwerk 1. Das angetriebene Transportfahrwerk 1 umfasst einen Rahmen 2. Im Ausführungsbeispiel ist der Rahmen 2 in Form eines "H" ausgebildet. Der Rahmen 2 umfasst zwei Längsträger 3,4 und einen die Längsträger verbindenden Querträger 5. Am Rahmen 2 sind im Ausführungsbeispiel zwei Antriebseinheiten 6, 7, insbesondere pendelnd, befestigt. Im Ausführungsbeispiel sind die beiden Antriebseinheiten 6, 7 weitgehend baugleich ausgebildet, insbesondere sind die beiden Antriebseinheiten 6, 7 symmetrisch ausgebildet. In einem weiteren Ausführungsbeispiel kann vorgesehen sein, dass das angetriebene Transportfahrwerk 1 nur eine Antriebseinheit 6, 7 umfasst.

Im Nachfolgenden soll eine der beiden Antriebseinheiten 6, 7 näher beschrieben werden, wobei die Beschreibung auf beide Antriebseinheiten 6, 7 zutrifft. Die Antriebseinheit 6, 7 umfasst eine Antriebsrolle 8. Die Antriebsrolle 8 ist zur Kraftübertragung auf einen Boden, auf welchem das angetriebene Transportfahrwerk 1 verfahren kann, vorgesehen. Die Antriebseinheit 6, 7 umfasst einen Motor 9, im Ausführungsbeispiel einen Elektromotor, bevorzugt einen Synchronmotor, insbesondere einen Dreiphasen-Synchronmotor. Die Kraft des Motors 9 wird auf die Antriebsrolle 8 übertragen. Die Antriebsrolle 8 überträgt die Kraft auf den Boden.

Das Transportfahrwerk 1 umfasst mindestens eine, im Ausführungsbeispiel acht Lastrollen 10. Die Lastrollen 10 sind nicht angetrieben. Die Lastrollen 10 überragen einen Großteil, der Last auf den Boden.

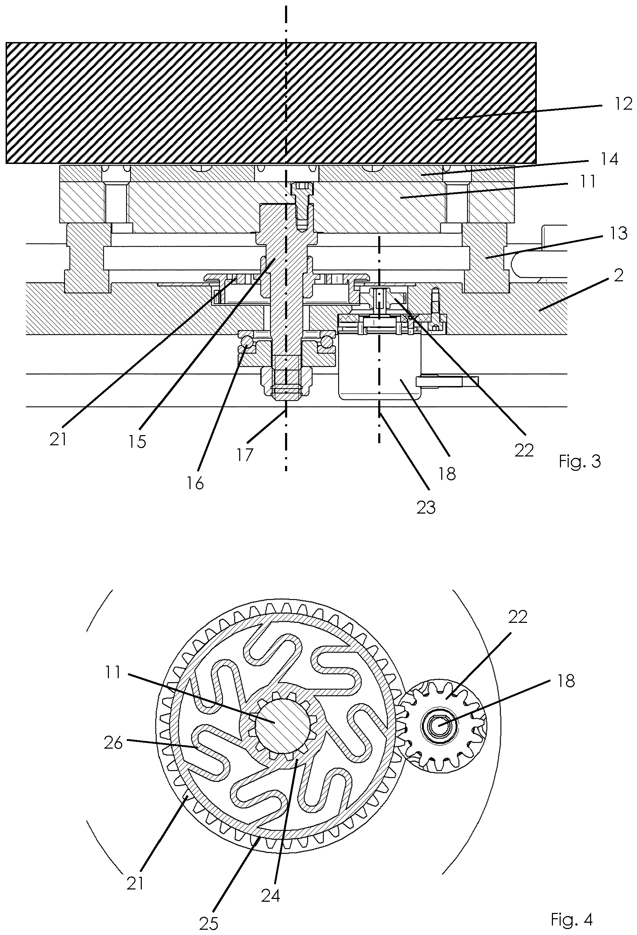

Das angetriebene Transportfahrwerk 1 umfasst einen in den Fig. 1 bis 3 dargestellten Drehteller 11. Der Drehteller 11 ist als Auflagepunkt bzw. Auflagefläche für eine beispielhaft in Fig. 4 gezeigte Last 12 vorgesehen. Wie gut in den Fig. 1 bis 3 zu sehen ist, ist der Drehteller 11 am Rahmen 2 befestigt, insbesondere drehbar befestigt. Hierzu ist zwischen Rahmen 2 und Drehteller 11 ein in Fig. 3 gezeigtes Lager 13 vorgesehen. Im Ausführungsbeispiel ist das Lager 13, insbesondere das erste Lager 13, ein Kugellager, insbesondere ein Axialkugellager, vorzugsweise ein Axialrillenkugellager.

Der Drehteller 11 umfasst optional eine Auflagematte 14, auf der die Last 12 auflegbar ist. Der Drehteller 11 einen Drehtellerbolzen 15. Der Drehtellerbolzen 15 ist im Ausführungsbeispiel über ein Lager 16, insbesondere ein Kugellager, insbesondere ein Axialrillenkugellager, direkt mit dem Rahmen 2 verbunden. Das zweite Lager 16 am Drehtellerbolzen 15 ist insbesondere kleiner ausgebildet als das erste Lager 13. Das zweite Lager 16 verspannt die gesamte Lagerung des Drehtellers 11 und verhindert ein Herausfallen des Drehtellers 11 aus dem Transportfahrwerk 11, insbesondere aus dem Rahmen 2, insbesondere wenn das Transportfahrwerk 1 umgedreht werden sollte.

Das erste Lager 13 kann zusätzlich auch als Radiallager verwendet sein. Bei Anfahr- und Bremsvorgängen versuchen sich die Kugeln im Lager 13 radial in ihren Laufbahnen zu bewegen. Es kommt zu kleinen Pendelbewegungen der gesamten Drehtellereinheit. Diese Pendelbewegungen werden, wie nachfolgend noch beschrieben wird, durch die federnde Wirkverbindung von Drehteller 11 mit einem weiter unten erläuterten Drehgeber 18 insoweit ausgeglichen, als dass sich diese Pendelbewegungen nicht auf den Drehgeber 18 übertragen und diesen schädigen und/oder zu fehlerhaften Messungen führen.

In einem weiteren Ausführungsbeispiel kann das Lager 16 entfallen und/oder es kann eine indirekte Lagerung erfolgen. Der Drehteller 11 ist um eine in den Fig. 2 und 3 gezeigte Drehtellerachse 17 drehbar. Der Drehteller 11 ist mittig am Rahmen 2 befestigt. Im Ausführungsbeispiel ist der Rahmen 2 als "H"-förmiger Rahmen ausgebildet, wobei der Drehteller 11 im Zentrum, insbesondere im geometrischen Zentrum, und/oder insbesondere im Schwerpunkt, und/oder insbesondere im Symmetriemittelpunkt, des "H"-Rahmens angeordnet ist. Im Ausführungsbeispiel ist der Drehteller 11 am Querträger 5 des Rahmens 2 befestigt. Die Drehtellerachse 17 des Drehtellers 11 schneidet die Rotationsachse der Antriebsrolle 8 in einem Winkel von etwa 90°. Der Winkel kann sich leicht ändern, insbesondere aufgrund einer pendelnden Lagerung der Antriebsrolle 8 am Rahmen 2.

Das angetriebene Transportfahrwerk 1 umfasst einen in Fig. 1 gezeigten Energiespeicher, insbesondere eine Batterie 19. Die Batterie 19 ist am Rahmen 2, im Ausführungsbeispiel beispielhaft an einem Längsträger3 des Rahmens 2, befestigt. Im Ausführungsbeispiel ist die Batterie 19 am Rahmen 2 eingehängt und insbesondere mit dem Rahmen 2 verriegelt. Damit ist die Batterie 19 einfach montierbar und demontierbar. Die Batterie 19 liefert die elektrische Energie für das angetriebene Transportfahrwerk 1.

Das angetriebene Transportfahrwerk 1 umfasst ein Steuerungssystem 20. Das Steuerungssystem 20 ist am Rahmen 2, im Ausführungsbeispiel beispielhaft an einem Längsträger 3 des Rahmens 2, befestigt. Im Ausführungsbeispiel sind die Batterie 19 und das Steuerungssystem 20 an unterschiedlichen Längsträgern 3, 4 des Rahmens 2 befestigt. Damit ist eine gute Gewichtsverteilung sowie eine kompakte Bauweise ermöglicht. Das Steuerungssystem 20 dient zum Steuern des angetriebenen Transportfahrwerks 1.

Das angetriebene Transportfahrwerk 1 umfasst einen in Fig. 2 und 3 gezeigten Drehgeber 18. Der Drehgeber 18 umfasst in einer optionalen Ausführungsform ein Metallgehäuse und/oder ist in einem Metallgehäuse angeordnet. Der Drehgeber 18 ist als Winkellagegeber bzw. Winkelsensor ausgebildet. Der Drehgeber 18 erfasst den Drehwinkel und/oder die Änderung des Drehwinkels des Drehtellers 11 relativ zum Rahmen 2. Die erfassten Daten, insbesondere der Drehwinkel bzw. die Änderung des Drehwinkels werden an das Steuerungssystem 20 gesandt und dort gegebenenfalls weiterverarbeitet. Der Drehgeber 18 ist im Ausführungsbeispiel unten, also unterseitig, also dem im Betriebszustand der dem Boden zugewandten Seite des Rahmens 2, am Rahmen 2 befestigt. Der Drehgeber 18 ist am Querträger 5 des Rahmens 2 befestigt. Der Drehgeber 18 steht in federnder Wirkverbindung mit dem Drehteller 19. In einem weiteren Ausführungsbeispiel kann der Drehgeber 18 oben angeordnet sein. In einem weiteren Ausführungsbeispiel kann der Drehgeber 18 mit einem integrierten Hub eingebaut sein.

Im Nachfolgenden soll beispielhaft anhand der Fig. 3 und 4 ein Ausführungsbeispiel erläutert werden, wie der Drehgeber 19 in federnder Wirkverbindung mit dem Drehteller 11 steht.

Im Ausführungsbeispiel nach den Fig. 3 und 4 ist eine Zahnradverbindung, insbesondere eine Stirnradverzahnung, zwischen Drehteller 11 und Drehgeber 19 vorgesehen. Am Drehteller 11 ist ein Zahnrad 21, vorzugsweise drehfest, verbunden. Am Drehgeber 18 ist ein weiteres Zahnrad 22, beispielsweise ein Ritzel, vorzugsweise drehfest verbunden. Das Zahnrad 21 des Drehtellers 11 und das weitere Zahnrad 22 des Drehgebers 18 greifen ineinander, so dass bei Drehung des Drehtellers 11 die Drehung des Drehtellers 11 über die Zahnräder 21, 22 auf den Drehgeber 18 übertragen wird. Damit kann der Drehgeber 18 den Drehwinkel und/oder die Änderung des Drehwinkels des Drehtellers 11 erfassen. Bevorzugt ist dreht der Drehgeber 18 und/oder das weitere Zahnrad 22 des Drehgebers 18 um eine Drehgeberachse 23. Im Ausführungsbeispiel sind die Drehgeberachse 23 und die Drehtellerachse 17 etwa parallel zueinander.

Wie gut in Fig. 4 zu erkennen ist, ist um Ausführungsbeispiel das Zahnrad 21 des Drehtellers 11 federnd und das weitere Zahnrad 22 des Drehgebers 18 ungefedert, insbesondere starr, ausgebildet, so dass eine federnde Wirkverbindung zwischen Drehteller 11 und Drehgeber 18 entsteht. In einem weiteren Ausführungsbeispiel kann das Zahnrad 21 des Drehtellers 11 ungefedert, insbesondere starr, und das weitere Zahnrad 22 des Drehgebers 18 federnd ausgebildet sein. In einem weiteren Ausführungsbeispiel kann das Zahnrad 21 des Drehtellers 11 federnd und das weitere Zahnrad 22 des Drehgebers 18 federn ausgebildet sein.

Im Ausführungsbeispiel nach Fig. 4 umfasst das gefederte Zahnrad 11 eine Zahnradnabe 24. Die Zahnradnabe 24 stellt eine drehfeste Verbindung zum Drehtellerbolzen 15 her. Das Zahnrad 11 umfasst einen Zahnaußenkranz 25. Am Zahnaußenkranz 25 sind die Zähne des Zahnrads 11 festgelegt. Der Zahnaußenkranz 25 greift in das weitere Zahnrad 22. Der Zahnaußenkranz 25 ist federnd mit der Zahnradnabe 24 verbunden. Im Ausführungsbeispiel nach Fig. 4 ist der Zahnaußenkranz 25 mit der Zahnradnabe 24 über einen Steg 26 verbunden. Zweckmäßig ist der Steg 26 mäanderförmig. Im Ausführungsbeispiel ist der Steg 26 S-förmig, wobei insbesondere ein Ende des S mit der Zahnradnabe 24 und das andere Ende des S mit dem Zahnaußenkranz 25 verbunden ist. Im Ausführungsbeispiel ist der Zahnaußenkranz 25 mit der Zahnradnabe 24 über genau sieben Stege 26 verbunden.

Vorzugsweise werden über den Steg 26, insbesondere über die Stege 26, Kräfte in Drehrichtung nahezu verlustfrei von der Zahnradnabe 24 zum Zahnaußenkranz 25 übertragen. Vorzugsweise werden über den Steg 26, insbesondere über die Stege, Kräfte in einer anderen Richtung als der Drehrichtung abgefedert und nur gering oder nicht von der Zahnradnabe 24 zum Zahnaußenkranz 25 übertragen.

Im Ausführungsbeispiel ist das Zahnrad 21 einteilig ausgebildet. Vorteilhaft umfasst das Zahnrad 21 Kunststoff. Vorteilhaft besteht das Zahnrad 21 aus Kunststoff.

In einem weiteren Ausführungsbeispiel sind die Zähne des Zahnrads 21 und/oder des weiteren Zahnrads 22 federnd ausgebildet, beispielsweise umfassen die Zähne Gummi, insbesondere sind die Zähne mit einer Gummibeschichtung versehen. Die federnd ausgebildeten Zähne können hierbei zusätzlich zur oben beschriebenen federnden Verbindung zwischen Zahnradnabe 24 und Zahnaußenkranz 25 vorgesehen sein. In einem weiteren Ausführungsbeispiel können die federnd ausgebildeten Zähne hierbei die oben beschriebene federnde Verbindung zwischen Zahnradnabe 24 und Zahnaußenkranz 25 ersetzen, insbesondere vollständig ersetzen.

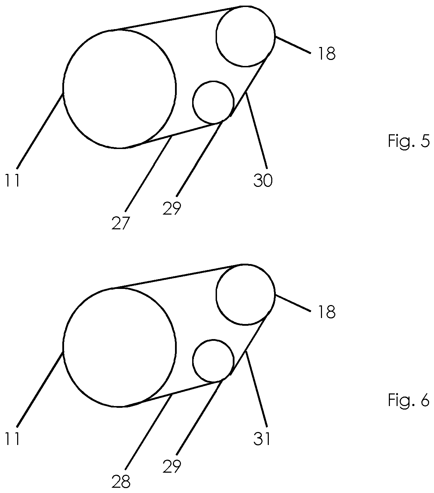

In einem weiteren, in Fig. 5 gezeigten Ausführungsbeispiel ist der Drehgeber 18 mit dem Drehteller 11 über eine Riemenverbindung 27, beispielsweise über eine Zahnriemenverbindung verbunden. In einem weiteren, in Figur 6 gezeigten Ausführungsbeispiel ist der Drehgeber 18 mit dem Drehteller 11 über eine Kettenverbindung 28 verbunden. Vorteilhaft umfasst die Riemenverbindung oder die Kettenverbindung einen Spanner 29. Der Spanner 29 ist vorgesehen, um den Riemen 30 der Riemenverbindung 27 oder die Kette 31 der Kettenverbindung 28 zu spannen. Vorteilhaft ist der Spanner federnd gelagert, insbesondere federnd zum Rahmen 2 gelagert.

Im Nachfolgenden soll anhand der Fig. 5 erläutert werden, wie eine Last 12 transportierbar sein kann.

Hierzu ist ein Transportsystem 32 vorgesehen. Das Transportsystem 32 umfasst im Ausführungsbeispiel ein erstes angetriebenes Transportfahrwerk 1 und ein zweites angetriebenes Transportfahrwerk 1'. In einem weiteren Ausführungsbeispiel kann das Transportsystem 32 auch mehr als zwei angetriebene Transportfahrwerke 1, 1' umfassen, beispielsweise drei angetriebene Transportfahrwerke, vier angetriebene Transportfahrwerke, sechs angetriebene Transportfahrwerke, acht angetriebene Transportfahrwerke, und dergleichen. Im nachfolgend beschriebenen Ausführungsbeispiel soll das Transportsystem 32 zwei angetriebene Transportfahrwerke 1, 1 ` umfassen. Insbesondere eine Übertragbarkeit auf mehrere Transportfahrwerke 1,1' soll gegeben sein. Im Ausführungsbeispiel sind die beiden angetriebenen Transportfahrwerke 1, 1' baugleich ausgebildet. Bezugszeichen mit und ohne "'" entsprechen hierbei gleichen Bauteilen, wobei sich die Unterscheidung durch das angetriebene Transportfahrwerk 1, 1' ergibt. Das Transportsystem 32 umfasst ein, insbesondere antriebsloses Rotationsfahrwerk 33. Das Rotationsfahrwerk 33 umfasst einen Auflagepunkt bzw. eine Auflagefläche, beispielsweise in Form eines Auflagetellers 34, insbesondere in Form eines Gummibalgs, für die Last 12. Das Rotationsfahrwerk 34 umfasst Lastrollen 35.

Die zu transportierende Last 12 liegt auf den Drehtellern 11, 11 ' der beiden angetriebenen Transportfahrwerke 1, 1' sowie optional auf dem Auflagepunkt, beispielsweise in Form des Auflagetellers 34, des optionalen Rotationsfahrwerks 33 auf.

Das Transportsystem 32 umfasst ein erstes Steuerungssystem 20 zum Steuern des ersten angetriebenen Transportfahrwerks 1. Das Transportsystem 32 umfasst ein zweites Steuerungssystem 20' zum Steuern des zweiten angetriebenen Transportfahrwerks 1'. Das erste angetrieben Transportfahrwerk 1 folgt zunächst und im Wesentlichen der vom Benutzer vorgegebenen Fahrtrichtung. Hierbei setzt das erste Steuerungssystem 20 die Fahrbefehle des Benutzers um, indem das erste Steuerungssystem 20 das erste angetriebene Transportfahrwerk 1 steuert.

Das zweite Steuerungssystem 20' steuert das zweite angetriebene Transportfahrwerk 1 ` in Abhängigkeit des ersten Drehwinkels oder der ersten Änderung des ersten Drehwinkels des ersten angetriebenen Transportfahrwerks 1 und in Abhängigkeit des zweiten Drehwinkels oder der zweiten Änderung des zweiten Drehwinkels des zweiten angetriebenen Transportfahrwerks 1'.

Im Ausführungsbeispiel nutzt das Transportsystem 32 zur Gesamtsteuerung des Transportsystem 32 das erste Steuerungssystem 20 des ersten Transportfahrwerks 1 bzw. das zweite Steuerungssystem 20' des zweiten Transportfahrwerks 1'. In einem weiteren Ausführungsbeispiel kann das Steuerungssystem 20, 20' außerhalb der Transportfahrwerke 1, 1' vorgesehen sein. In einem weiteren Ausführungsbeispiel kann auch nur ein Steuerungssystem 20, 20' vorgesehen sein.

Soll nun eine Last 12 vom Transportsystem 32 transportiert werden, so wird ein Benutzer bevorzugt folgende Verfahrensschritte vornehmen:
- Ausrichtung des ersten angetriebenen Transportfahrwerks 1,
- Ausrichtung des zweiten angetriebenen Transportfahrwerks 1',
- Kalibrierung, insbesondere Nullen, des ersten Drehgebers 18 und des zweiten Drehgebers 18',
- Steuerung des zweiten angetriebenen Transportfahrwerks 1 ' mit dem Steuerungssystem 20, 20' in Abhängigkeit des ersten Drehwinkels und/oder der ersten Änderung des ersten Drehwinkels des ersten angetriebenen Transportfahrwerks 1 und in Abhängigkeit des zweiten Drehwinkels und/oder der zweiten Änderung des zweiten Drehwinkels des zweiten angetriebenen Transportfahrwerks 1 `.

Unter Verwendung von zwei angetriebenen Transportfahrwerken 1, 1 `, sogenannter DUO-Betrieb, kann, verglichen mit der Verwendung nur eines Transportfahrwerks, 1 etwa die doppelte Zuglast erbracht werden. Vorteilhaft bildet ein Rotationsfahrwerk, das beispielsweise über 360° in alle Richtungen folgen kann, den dritten Auflagepunkt für die Last 12. Im DUO-Betrieb können insbesondere engste Radien gefahren werden. Auch ist beispielsweise nach einer Drehrichtungsänderung beider Fahrwerke 1, 1 ` eine Weiterfahrt quer zur ursprünglichen Fahrtrichtung möglich.

Für den DUO-Betrieb ist vorteilhaft, wenn beide angetriebenen Fahrwerke 1 1 ' synchron, insbesondere absolut synchron, fahren. Fahren die Fahrwerke 1, 1' nicht in die gleiche oder etwa gleiche Richtung, kann es beispielsweise zu Verspannung der Last 12 kommen.

Eine Synchronfahrt wird beispielsweise dadurch erreicht, dass ein Bediener, beispielsweise über eine Funkfernsteuerung, eine Lenkwinkeländerung an das "Master-Fahrwerk", beispielsweise das erste angetriebene Transportfahrwerk 1, übermittelt. Die Winkeländerung wird insbesondere durch den Drehgeber 18 im Master-Fahrwerk laufend geprüft. Das Master-Fahrwerk übermittelt beispielsweise an den Slave, also insbesondere das zweite angetriebene Transportfahrwerk 1', den geforderten Winkel drahtlos. Insbesondere über den Drehgeber 18 im Slave wird dessen Winkelstellung wieder, beispielsweise drahtlos, an den Master gesendet, insbesondere dessen Steuerung die erforderlichen Korrekturen berechnen kann.

In einem der oben bereits beschriebenen Ausführungsbeispiele ist beispielhaft eine Stirnradverzahnung gewählt.

Wenn keine federnde Wirkverbindung zwischen Drehgeber 18 und Drehteller 11 eingesetzt wird, so kann es zu folgenden Problemen führen: Hat die Verzahnung insbesondere Spiel, führt das beispielsweise zu einer Ungenauigkeit des Drehgebersignal und/oder zu einem fehlerhaften Drehgebersignal und zum "Schwänzeln" der Fahrwerke 1, 1'. Drücken die beiden Zahnräder 21, 22 insbesondere zu stark aufeinander, kann die Lagerung des Drehgebers 18 beispielsweise beschädigt werden oder dessen Welle wird so stark gebogen, dass insbesondere einzelne Signalimpulse "verschluckt" werden. Dies kann zu einem ständig anwachsenden Winkelfehler führen.

Durch die Verwendung einer federnden Wirkverbindung zwischen Drehgeber 18 und Drehteller 11 können die im Absatz zuvor beschriebenen Nachteile aufgehoben werden. Insbesondere wurde beispielhaft ein Zahnrad so gestaltet, das sein Zahnkranz federnd mit seiner Nabe verbunden ist. Hierdurch kann die Verzahnung beispielsweise spielfrei vorgespannt werden und gleichzeitig können beispielsweise Taumelbewegungen des Drehtellers 11 federnd kompensiert werden, jedenfalls nicht an den Drehgeber 18 übertragen werden.

Zweckmäßig ist vorgesehen, dass das Transportsystem 32 dem Bediener im Fall einer Fehlstellung der Fahrwerke eine Fehlermeldung ausgibt. Es hat sich gezeigt, dass eine Fehlstellung der Fahrwerke 1, 1', beispielsweise infolge Pendelbewegung, optisch erst spät erkennbar ist. Zweckmäßig stoppt Im Fehlerfall das Transportsystem 32 selbständig. Der Bediener kann die Fahrwerke 1, 1 ` neu ausrichten und so den Fehler beseitigen.

## Patentansprüche

1. Angetriebenes Transportfahrwerk (1) mit einem Rahmen(2), mit einer mit dem Rahmen (2) wirkverbundenen Antriebseinheit (6, 7) und mit einem mit dem Rahmen (2) wirkverbundenen Drehteller (11), wobei der Drehteller (11) zur Auflage einer zu transportierenden Last (12) vorgesehen ist, und wobei der Drehteller (11) relativ zum Rahmen (2) drehbar ist, wobei das angetriebene Transportfahrwerk (1) einen Drehgeber (18) umfasst, wobei der Drehgeber (18) den Drehwinkel und/oder die Änderung des Drehwinkels des Drehtellers (11) relativ zum Rahmen (2) erfasst, **dadurch gekennzeichnet, dass** der Drehgeber (18) mit dem Drehteller (11) federnd wirkverbunden ist.

2. Angetriebenes Transportfahrwerk nach Anspruch 1, **dadurch gekennzeichnet, dass** der Drehteller (11) um eine Drehtellerachse (17) drehbar ist, dass der Drehgeber (18) um eine Drehgeberachse (23) drehbar ist, und dass die Drehtellerachse (17) und die Drehgeberachse (23) etwa parallel zu einander ausgerichtet sind.

3. Angetriebenes Transportfahrwerk nach Anspruch 1 oder 2, **dadurch gekennzeichnet, dass** der Drehgeber (18) um eine Drehgeberachse (23) drehbar ist, und dass der Drehgeber (18) mit dem Drehteller (11) in zur Drehgeberachse (23) radialen Richtung federnd wirkverbunden ist.

4. Angetriebenes Transportfahrwerk nach einem der Ansprüche 1 bis 3, **dadurch gekennzeichnet, dass** der Drehgeber (18) um eine Drehgeberachse (23) drehbar ist, und dass der Drehgeber (18) mit dem Drehteller (11) in zur Drehgeberachse (23) axialen Richtung beweglich gelagert ist.

5. Angetriebenes Transportfahrwerk nach einem der Ansprüche 1 bis 4, **dadurch gekennzeichnet, dass** der Drehgeber (18) mit dem Drehteller (11) spielfrei wirkverbunden, insbesondere vorgespannt, ist.

6. Angetriebenes Transportfahrwerk nach einem der Ansprüche 1 bis 5, **dadurch gekennzeichnet, dass** der Drehgeber (18) mit dem Drehteller (11) über eine Zahnradverbindung (21, 22), insbesondere über eine Stirnradverzahnung, verbunden ist.

7. Angetriebenes Transportfahrwerk nach Anspruch 6, **dadurch gekennzeichnet, dass** ein Zahnrad (21) einen Zahnaußenkranz (25) und eine Zahnradnabe (24) umfasst, wobei der Zahnaußenkranz (25) mit der Zahnradnabe (24) federnd verbunden ist.

8. Angetriebenes Transportfahrwerk nach Anspruch 6 oder 7, **dadurch gekennzeichnet, dass** ein Zahnrad (21, 22) Zähne umfasst, wobei die Zähne federnd ausgebildet sind, insbesondere wobei die Zähne Gummi umfassen, insbesondere wobei die Zähne mit einer, insbesondere federnden, Gummischicht beschichtet sind.

9. Angetriebenes Transportfahrwerk nach einem der Ansprüche 6 bis 8, **dadurch gekennzeichnet, dass** das Zahnrad (21, 22) einteilig ausgebildet ist.

10. Angetriebenes Transportfahrwerk nach einem der Ansprüche 6 bis 9, **dadurch gekennzeichnet, dass** das Zahnrad (21) mit dem Drehteller (11) drehfest verbunden ist, dass der Drehgeber (18) ein weiteres Zahnrad (22) umfasst, und dass das weitere Zahnrad (22) des Drehgebers (18) ungefedert ist.

11. Angetriebenes Transportfahrwerk nach einem der Ansprüche 1 bis 5, **dadurch gekennzeichnet, dass** der Drehgeber (18) mit dem Drehteller (11) über eine Riemenverbindung (27), insbesondere über eine Zahnriemenverbindung oder über eine Kettenverbindung (28), verbunden ist.

12. Angetriebenes Transportfahrwerk nach Anspruch 11, **dadurch gekennzeichnet, dass** die Riemenverbindung (27) oder die Kettenverbindung (27) einen Spanner (29), insbesondere einen federnden Spanner zum Spannen des Riemens (30) der Riemenverbindung (27) oder der Kette (31) der Kettenverbindung (27), umfasst.

13. Zahnrad, insbesondere für ein angetriebenes Transportfahrwerk (1) nach einem der Ansprüche 1 bis 12, mit einem Zahnaußenkranz (25) und mit einer Zahnradnabe (24), wobei der Zahnaußenkranz (25) mit der Zahnradnabe (24) federnd verbunden ist.

14. Transportsystem (32) zum Transportieren einer Last (12) mit einem ersten angetriebenen Transportfahrwerk (1) mit einem ersten Rahmen (2), mit einer mit dem ersten Rahmen (2) wirkverbundenen ersten Antriebseinheit (6, 7) und mit einem mit dem ersten Rahmen (2) wirkverbundenen ersten Drehteller (11), wobei der erste Drehteller (11) zur Auflage der zu transportierenden Last (12) vorgesehen ist, und wobei der erste Drehteller (11) relativ zum ersten Rahmen (2) drehbar ist, wobei das erste angetriebene Transportfahrwerk (1) einen ersten Drehgeber (18) umfasst, wobei der erste Drehgeber (18) den ersten Drehwinkel und/oder die Änderung des ersten Drehwinkels des ersten Drehtellers (11) relativ zum ersten Rahmen (2) erfasst, wobei der erste Drehgeber (18) mit dem ersten Drehteller (11) federnd wirkverbunden ist, und mit einem zweiten angetriebenen Transportfahrwerk (1') mit einem zweiten Rahmen (2'), mit einer mit dem zweiten Rahmen (2') wirkverbundenen zweiten Antriebseinheit (6', 7') und mit einem mit dem zweiten Rahmen (2') wirkverbundenen zweiten Drehteller (11'), wobei der zweite Drehteller (11') zur Auflage der zu transportierenden Last (12) vorgesehen ist, und wobei der zweite Drehteller (11') relativ zum zweiten Rahmen (2') drehbar ist, wobei das zweite angetriebene Transportfahrwerk (1 `) einen zweiten Drehgeber (18') umfasst, wobei der zweite Drehgeber (18') den zweiten Drehwinkel und/oder die Änderung des zweiten Drehwinkels des zweiten Drehtellers (11') relativ zum zweiten Rahmen (2') erfasst, wobei der zweite Drehgeber (18') mit dem zweiten Drehteller (11') federnd wirkverbunden ist, wobei das Transportsystem (32) ein Steuerungssystem (20, 20') zum Steuern des zweiten angetriebenen Transportfahrwerks (1') in Abhängigkeit des ersten Drehwinkels und/oder der ersten Änderung des ersten Drehwinkels des ersten angetriebenen Transportfahrwerks (1) und in Abhängigkeit des zweiten Drehwinkels und/oder der zweiten Änderung des zweiten Drehwinkels des zweiten angetriebenen Transportfahrwerks (1') umfasst.

15. Verfahren zum Transportieren einer Last (12) mit einem Transportsystem (32) nach Anspruch 14, mit den folgenden Verfahrensschritten:
- Ausrichtung des ersten angetriebenen Transportfahrwerks (1),
- Ausrichtung des zweiten angetriebenen Transportfahrwerks (1'),
- Kalibrierung, insbesondere Nullen, des ersten Drehgebers (18) und des zweiten Drehgebers (18'),
- Steuerung des zweiten angetriebenen Transportfahrwerks (1') mit dem Steuerungssystem (20, 20') in Abhängigkeit des ersten Drehwinkels und/oder der ersten Änderung des ersten Drehwinkels des ersten angetriebenen Transportfahrwerks (1) und in Abhängigkeit des zweiten Drehwinkels und/oder der zweiten Änderung des zweiten Drehwinkels des zweiten angetriebenen Transportfahrwerks (1').
